# DEMANDE DE BREVET EUROPEEN

(11) **EP 3 062 173 A1**
(43) Date de publication de la demande: **31.08.2016**
(21) Numéro de dépôt: 15156728.6
(22) Date de dépôt: 26.02.2015
(51) Int. Cl.: G04G 21/02, G09B 19/00

(54) **Objet portable connecté pour de multiples activités**

(71) Demandeur: SWATCH AG, CH-2500 Biel (CH)
(72) Inventeur: HUBELI, Marco, 8047 Zürich (CH); LEPORE, Olivia, 3006 Bern (CH); BONNET, Thierry, 1205 Genève (CH); GILLER, Ludovic, 1763 Granges-Paccot (CH); STOLPE, Alexander, 04105 Leipzig (DE); ECKELMANN, Christoph, 04275 Leipzig (DE); STREICHER, Markus, 04315 Leipzig (DE)
(74) Mandataire: Tournel, Maxime Jean-Joseph

(57) **Abrégé**

L'invention concerne un objet portable (1),tel qu'une montre, comprenant un boitier (10) dans lequel un module électronique (14) est agencé, ce module électronique étant apte à fournir au moins une information à des moyens d'affichage (18), le module électronique comprenant une unité de calcul (141) lié à un module mémoire (143) et un premier capteur (CPT1), tel qu'un accéléromètre ou un gyroscope, l'unité de calcul étant apte à utiliser un premier algorithme pour coopérer avec le premier capteur pour fournir une information liée à une première fonction, telle qu'identifier le type d'activités sportives effectué par l'utilisateur de l'objet électronique (1).

## Description

La présente invention concerne un objet portable comprenant un boitier dans lequel un module électronique est agencé, ce module électronique étant apte à fournir au moins une information à des moyens d'affichage, le module électronique comprenant une unité de calcul lié à un module mémoire et un premier capteur, l'unité de calcul étant apte à utiliser un premier algorithme pour coopérer avec le premier capteur pour fournir une information liée à une première fonction

### ART ANTÉRIEUR

Il est connu des objets portables dédiés au sport ou au moins à une activité physique permettant à l'utilisateur de recueillir des informations liées à ladite activité physique. Un type d'objet portable connu est un bracelet podomètre dans lequel au moins un accéléromètre est agencé. Cet accéléromètre est électriquement connecté à une unité de commande comme un microcontrôleur ou un processeur, et à une unité mémoire. Cet ensemble est régi par un programme qui va utiliser les données récoltées par l'accéléromètre pour fournir une indication du nombre de pas. Ces données sont stockées dans la mémoire et peuvent être affichées via un dispositif d'affichage tel que des LED ou un écran LCD ou transférées vers un autre appareil via un circuit de communication de type Bluetooth ou NFC.

Toutefois, un inconvénient de ce type d'objets portables connectés est qu'il ne permet la gestion que d'un seul type d'activité. En effet, avoir une multitude d'activités distinctes à détecter est compliqué car chaque activité possède ses propres caractéristiques. Par exemple, le fait de marcher ou de courir implique un rythme régulier alors que des activités telles que le tennis ou le volley-ball impliquent des mouvements brusques et irréguliers. De ce fait, l'accéléromètre doit avoir un spectre de fonctionnement suffisamment large afin de ne pas risquer d'avoir des mesures faussées mais en contrepartie un tel accéléromètre peut présenter un comportement inadéquat tout en présentant une plus forte consommation énergétique. Or, pour les objets portables dit connectés, la consommation électrique est un paramètre important car il ne faut pas que la batterie ou la pile se décharge trop vite.

### RÉSUMÉ DE L'INVENTION

A cet effet, la présente invention cherche à résoudre les problèmes susmentionnés et se propose de fournir un objet portable apte à fournir des indications sur plusieurs types d'activité tout en ayant une gestion de la consommation électrique efficace.

L'invention concerne donc un objet portable comprenant un boitier dans lequel un module électronique est agencé, ce module électronique étant apte à fournir au moins une information à des moyens d'affichage, le module électronique comprenant une unité de calcul liée à un module mémoire et un premier capteur, l'unité de calcul étant apte à utiliser un premier algorithme pour coopérer avec le premier capteur pour fournir une information liée à une première fonction, caractérisé en ce que le module électronique comprend en outre au moins un second capteur, l'unité de calcul étant apte à utiliser un second algorithme pour coopérer avec le second capteur pour fournir une information liée à une seconde fonction.

Dans un premier mode de réalisation avantageux, le premier capteur est doté d'une première sensibilité et le second capteur d'une seconde sensibilité, la seconde sensibilité étant plus grande que la première sensibilité.

Dans un second mode de réalisation avantageux, les premiers et seconds capteurs sont des accéléromètres.

Dans un troisième mode de réalisation avantageux, l'unité de calcul est apte à gérer plusieurs algorithmes par capteur.

Dans un quatrième mode de réalisation avantageux, le module électronique comprend en outre un module de communication permettant audit objet portable de communiquer avec au moins un autre appareil.

Dans un autre mode de réalisation avantageux, le module de communication permet audit objet portable de communiquer avec un appareil d'un autre type.

Dans un autre mode de réalisation avantageux, le module de communication permet audit objet portable de communiquer avec un appareil d'un même type.

Dans un autre mode de réalisation avantageux, le premier algorithme permet de gérer une application podomètre concernant le nombre de pas.

Dans un autre mode de réalisation avantageux, le second algorithme permet de gérer une application volley-ball.

Dans un autre mode de réalisation avantageux, le second algorithme permet de gérer une application applaudissement.

L'invention concerne également un ensemble d'objets portables selon l'une des revendications précédentes, caractérisé en ce que lesdits objets portables communiquent entre eux pour s'échanger des informations concernant au moins l'un des premiers et seconds algorithmes.

Dans un mode de réalisation avantageux, lesdits objets portables communiquent également avec un appareil.

Dans un autre mode de réalisation avantageux, lesdits objets portables sont regroupés en regroupement, chaque objet portable d'un regroupement communiquant avec les différents objets portables du même regroupement et en ce que ledit ensemble comprend un unique appareil pour communiquer avec la totalité des objets portables des regroupements.

### DESCRIPTION DES DESSINS

D'autres caractéristiques et avantages de l'invention apparaîtront à la lecture de la description détaillée qui va suivre, en référence aux dessins annexés, où :
- La figure 1 représente une vue schématique de l'objet portable selon l'invention ;
- La figure 2 représente un schéma du module électronique de l'objet portable selon l'invention ;
- Les figures 3a et 3b représentent une vue de l'objet portable selon l'invention agencé sur l'utilisateur ;
- La figure 4 représente un schéma du module de communication de l'objet portable selon l'invention ;
- La figure 5 représente un schéma d'un groupe formé un appareil extérieur et de l'objet portable selon l'invention ;
- Les figures 6a et 6b représentent des configurations d'ensembles d'objet portable selon l'invention avec présence ou non d'appareils extérieurs.

### DESCRIPTION DÉTAILLÉE

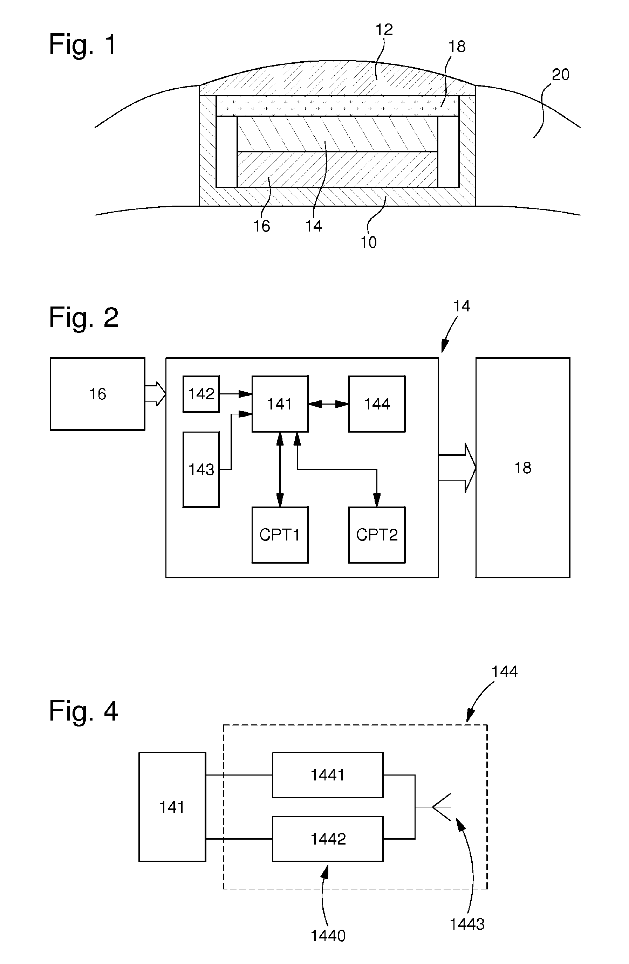

La présente invention est représentée schématiquement à la figure 1. Cette figure 1 représente schématiquement un objet portable 1 tel qu'une montre selon l'invention. Cette montre 1 comprend un boîtier 10 auquel est attaché un bracelet 10. Ce boîtier 10 est fermé par une glace 12 et comprend un module électronique 14 alimenté par une source d'énergie 16, cette source d'énergie 16 pouvant être une pile ou un accumulateur. Des moyens de commande (non représentés) se présentant sous forme de bouton ou de touches tactiles sont agencés au niveau du boitier 10 ou de la glace 12.

Le module électronique 14, visible à la figure 2, comprend une unité de calcul 141 comme un microprocesseur, connectée électriquement à une base de temps 142 et à un module mémoire 143 pour le stockage de données. La base de temps 142 permet à l'unité de calcul 141 de fournir une information de temps qui sera délivrée à des moyens d'affichage 18. Ces moyens d'affichage 18 peuvent être un élément d'affichage numérique comme un écran LCD et/ou un élément d'affichage analogique comme au moins une aiguille.

Le module électronique 14 comprend en outre au moins un premier capteur CPT1. Ce premier capteur CPT1 est adapté pour fournir au moins une information liée à un mouvement, ce premier capteur CPT1 pourra être un gyroscope ou un accéléromètre. Cet accéléromètre sera un accéléromètre à un ou plusieurs axes.

Dans le module électronique 14, un programme est implémenté pour permettre le traitement de ou des informations du premier capteur CPT1. Effectivement, une activité physique peut se définir par un ou des mouvements particuliers qui se caractérisent, par exemple, par sa fréquence, son amplitude, ses variations de valeurs. Il semble admis qu'une activité de marche ou de course à pied est basée sur un mouvement d'amplitude constant, ayant une certaine fréquence alors qu'un mouvement du bras sur une activité du type tennis ou volley-ball aura des caractéristiques différentes. Le programme implémenté est ainsi spécifiquement dédié pour reconnaître le mouvement particulier lié à l'activité et fournir à l'utilisateur au moins une indication liée à ce mouvement détecté et donc à l'activité physique liée. Cette indication est alors envoyée aux moyens d'affichage 18.

Avantageusement selon l'invention, le module électronique 18 comprend au moins un second capteur CPT2 également adapté pour fournir au moins une information liée à un second mouvement particulier, ce second capteur pourra être un gyroscope ou un accéléromètre. Ce second capteur CPT2 est utilisé pour que les informations qu'il fournit soient utilisées et traitées selon un second programme également implémenté. Effectivement, les informations fournies par des accéléromètres sont sensiblement identiques mais c'est l'algorithme du second programme qui traite ces informations qui permet d'en déduire des indications différentes.

Par exemple, un premier programme lié au premier capteur CPT1 pourra traiter une information liée au déplacement de l'utilisateur c'est-à-dire une fonction podomètre alors que le second programme lié au second capteur CPT2 pourra fournir une indication concernant le mouvement spécifique du bras de l'utilisateur qui porte la montre comme par exemple une fonction tennis ou volley-ball.

Cette configuration d'avoir différents capteurs CPT liés chacun à un programme spécifique c'est-à-dire liée à la détection d'un mouvement particulier permet d'adapter le capteur au mouvement. On comprendra alors que pour une application de type podomètre, il n'est pas nécessaire d'avoir un accéléromètre capable de supporter des accélérations supérieures à -8G à +8G ce qui n'est pas le cas pour une application de type tennis ou volley-ball, ces applications ayant des accélérations pouvant allée de -16G à +16G.

De plus, comme la fonction podomètre est susceptible de tourner en permanence, la consommation est importante. Par conséquent, il devient possible d'avoir, pour la fonction podomètre qui tourne en permanence, un capteur peu gourmand alors que pour la fonction volley-ball, un capteur plus performant peut être utilisé.

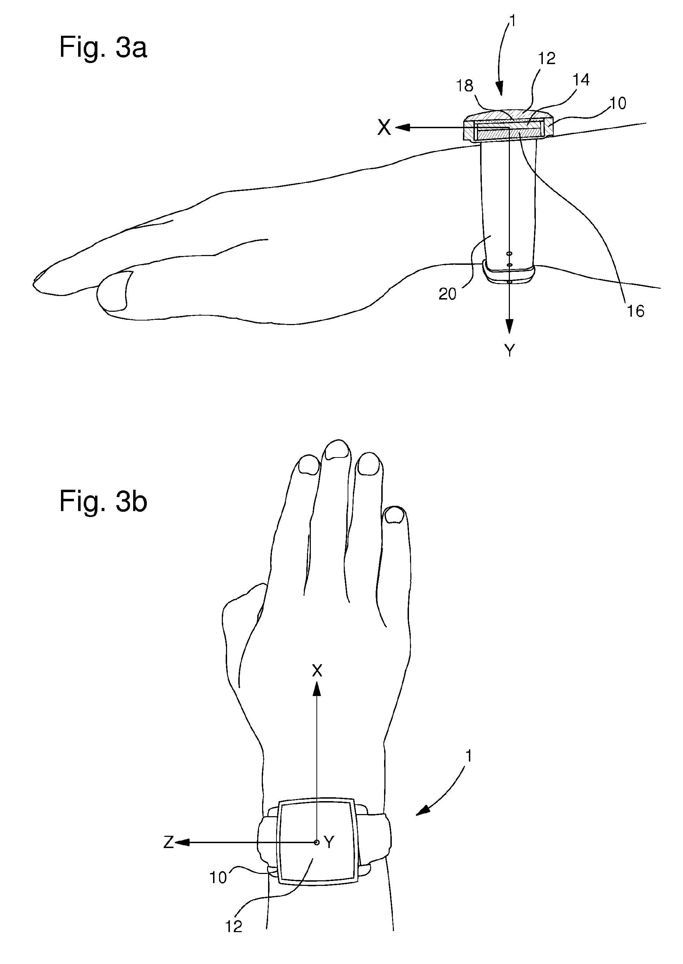

Par exemple, pour une fonction volley-ball, le second capteur CPT2 est un accéléromètre multiaxes préférentiellement un capteur à 3 axes (x, y et z). Comme visible aux figures 3a et 3b, l'axe x sera orienté pour être parallèle à l'avant-bras de l'utilisateur, l'axe z s'étendant perpendiculairement à la paume de la main alors que l'axe z s'étendant perpendiculairement à l'axe de l'avant-bras dans le même plan que la paume de la main. Ces trois axes permettent, via un algorithme dédié, de fournir des informations liées au volley-ball.

Pour cela, l'algorithme lié au volley-ball consiste à utiliser différentes étapes pour fournir ces informations.

Une première étape consiste à passer d'un fonctionnement dit passif à un fonctionnement dit actif. En effet, le capteur CPT2 utilisé pour l'application volley-ball possède une sensibilité élevée de sorte que son utilisation est consommatrice d'énergie électrique. Par conséquent, il convient de ne pas l'utiliser en permanence lorsque la fonction volley-ball est activée. Ainsi, dans un fonctionnement dit passif, les mesures sont effectuées à environ 40hz et la détection d'une accélération au-dessus d'un certain seuil le réveille.

Dans une seconde étape, les données d'accélération selon chacun des axes du capteur CPT2 sont enregistrées puis traiter. Ce traitement consiste en un filtrage pour enlever le bruit éventuel. Les valeurs d'accélération sont ensuite traiter numériquement pour obtenir une valeur brute d'accélération.

Dans une troisième étape, la valeur brute d'accélération est utilisée pour être associée à un arbre de décision et à un tableau de correspondance. En effet, les caractéristiques représentatives des différents mouvements faits par un joueur de volley-ball sont stockées dans la mémoire 143 de sorte à pouvoir être comparées afin de déterminer le mouvement adéquat.

Dans une dernière étape, les valeurs brutes d'accélération d'un intervalle de temps sont utilisées pour définir la puissance ou l'intensité du mouvement. Pour cela, les valeurs brutes d'accélération mesurées à chaque instant durant cet intervalle sont compilées pour fournir une donnée de puissance sur une échelle donnée.

Dans une variante, il est envisageable que les informations fournies par l'un ou l'autre des capteurs CPT1, CPT2 soient utilisées dans des applications différentes. Effectivement, avec une montre bracelet, il est envisageable de recueillir des informations et indications à propos des mouvements effectuées par le bras de l'utilisateur portant la montre. Or, la récupération de ce type d'informations peut être utilisée dans une multitude d'application utilisant le ou les bras comme par exemple la boxe, le volley-ball, le tennis. Pour une application volley-ball ou une application boxe, il est intéressant pour l'utilisateur de savoir combien de coups ou tirs il a pu faire, quels types de coups ou tirs et la puissance de ces coups ou tirs. Il est donc nécessaire d'avoir différents algorithmes.

Il est également envisageable que le second capteur CPT2 de l'objet portable 1 puisse permettre l'utilisation d'une fonction ludique du type applaudissement. Cette fonction applaudissement est apte à détecter le mouvement d'un applaudissement c'est-à-dire le mouvement des bras d'une personne pour fournir à l'utilisateur le nombre d'applaudissements effectués et leur intensité. Un algorithme dédié permet de distinguer un applaudissement d'un autre mouvement. Par ailleurs, on comprendra que cette détection des applaudissements peut être intégrée dans la fonction volley-ball afin d'être capable de distinguer les mouvements de passes/tirs des joueurs aux mouvements d'applaudissements des joueurs qui s'encouragent mutuellement. Ces applaudissements peuvent être individuels, chaque joueur tapant dans ses mains, ou général, les joueurs se tapant les mains tous ensembles.

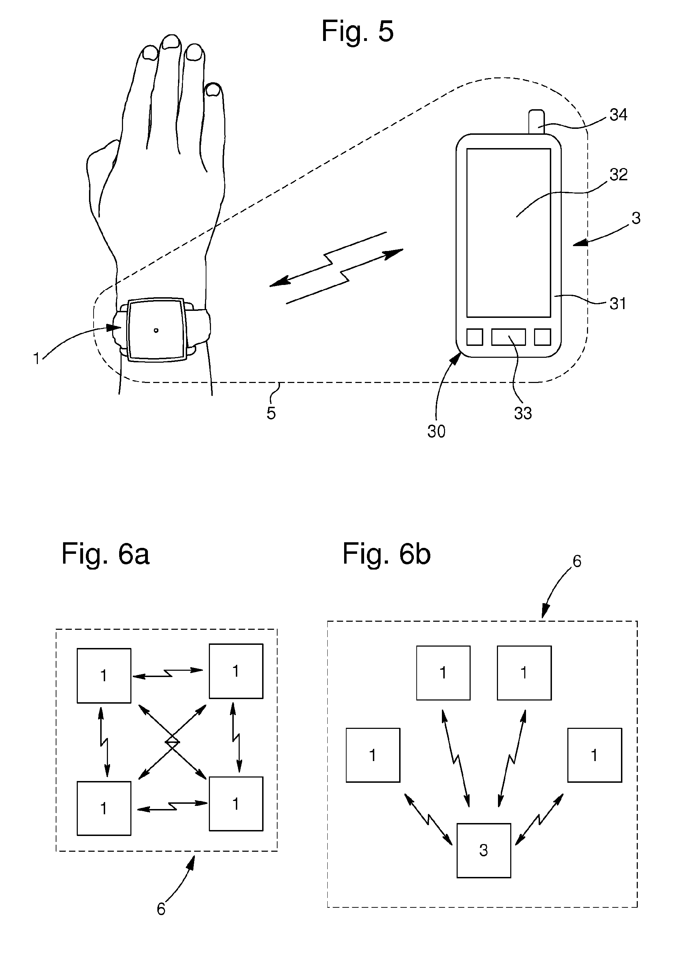

Dans un mode de réalisation préféré, l'objet portable selon l'invention est réalisé de sorte que le module électronique 14 comprenne en outre un module de communication 144. Un tel module de communication consiste en un circuit émetteur-récepteur 1440 comprenant une boucle émettrice 1441, une boucle réceptrice 1442 et une antenne 1443, le tout utilisant un protocole de communication tel que le protocole Bluetooth ou wifi ou NFC pour échanger des informations avec un appareil extérieur 3 comme visible aux figures 4 et 5. Il est également possible que le module communication 144 comprennent un circuit émetteur-récepteur 1440 utilisant un premier protocole et un circuit émetteur-récepteur 1440 utilisant un second protocole, voir d'autres circuits émetteur-récepteur 1440.

Un tel appareil extérieur 3 peut être un objet électronique d'un autre type comme un téléphone mobile, une tablette tactile, un ordinateur ou tous autres appareils électroniques possibles. Cet appareil extérieur 3 est muni d'un boitier 31 dans lequel un module électronique est agencé, ce module électronique envoyant des informations vers un élément d'affichage 32. Des moyens de commande 33 sont prévus pour permettre à l'utilisateur de contrôler ledit appareil 3. Un circuit émetteur-récepteur muni d'une antenne 34 est incorporé pour communiquer avec d'autres appareils.

Le circuit émetteur-récepteur 1440 de l'objet portable 1 selon l'invention est alors capable de communiquer avec au moins un appareil extérieur 3 de sorte à envoyer ou recevoir des données liées aux différents capteurs CPT1, CPT2. Un tel objet portable 1 muni d'un module de communication 144 fait alors partie d'un groupe 5 dans lequel les informations liées aux fonctions utilisant les différents capteurs CPT1, CPT2 sont envoyées vers ledit appareil extérieur 3 pour que l'utilisateur puisse en faire un suivi par exemple. Par exemple, pour une fonction podomètre, les données du nombre de pas et des calories sont transférées vers un téléphone portable, ce dernier étant muni d'un programme appelé application spécifiquement créé et dédié à l'activité podomètre. Cette application peut permettre de voir l'évolution des performances de l'utilisateur. Pour cette application podomètre, il est envisageable d'avoir le nombre de pas, la distance, le nombre de calories brulées au jour le jour.

Si les données sauvegardées dans la mémoire 143 de l'objet portable 1 concernant les différents capteurs CPT1, CPT2 sont envoyées vers l'appareil extérieur 3, les données liées aux paramètres internes de la montre 1 peuvent faire le chemin inverse. En effet, pour les différentes fonctions de l'objet portable 1, des paramètres peuvent être réglés directement depuis ledit objet portable 1 mais l'application de l'appareil extérieur 3 peut être agencée pour permettre un réglage depuis ledit appareil extérieur 3 pour ensuite envoyer ces réglages vers l'objet portable 1.

Dans une autre variante, l'objet portable 1 selon l'invention muni d'un module de communication 144 est agencé pour pouvoir communiquer avec un objet portable 1 du même type c'est-à-dire avec un autre objet portable 1 selon l'invention. Cette variante permet ainsi un échange de données entre deux objets portables 1 selon l'invention afin par exemple de permettre une stimulation mutuelle entre deux personnes. Ainsi dans une application podomètre, il est envisageable de permettre à deux personnes de comparer leur nombre de pas réalisés dans la journée alors que pour une application volley-ball, il est envisageable que cela permette un échange de puissance de tir entre deux joueurs de la même équipe.

Bien entendu, les règles de communication entre deux objets portables 1 selon l'invention sont différents des règles de communications entre un objet portable 1 selon l'invention et un appareil électronique extérieur 3, ces règles de communication étant plus restrictives. En effet, cette restriction est imposée par le fait qu'un utilisateur de l'objet portable 1 selon l'invention ne peut pas écrire des données dans un autre objet portable 1 selon l'invention. Pour cela, les règles de communication sont éditées afin d'avoir qu'une possibilité de lecture d'emplacement spécifique. Par exemple pour une application podomètre, les règles de communication peuvent être éditées pour ne permettre que de lire l'emplacement de la mémoire 143 où est stocké le nombre de pas du jour.

Cette possibilité de communiquer avec un autre objet portable 1 selon l'invention ou avec un appareil électronique extérieur 3 permet d'envisager la création d'une communauté ou ensemble 6. Cette communauté se caractérise par un ensemble d'objets portables 1 liés entre eux de sorte que les données liées aux fonctions dudit objet portable 1 puissent être rassemblées et comparées comme visible à la figure 6a. Avantageusement, cette communauté 6 d'objets portables 1 peut également être liée à au moins un appareil électronique extérieur muni d'une plateforme spécifique pour l'une ou l'autre des fonctions comme visible à la figure 6b. Par exemple, pour la fonction volley-ball, il peut être prévu que les joueurs d'une même équipe portent chacune l'objet portable 1 selon l'invention et que l'entraineur soit équipé par un appareil électronique extérieur 3 tel qu'une tablette muni d'une plateforme qui recueille les différentes données des objets portables 1 utilisées par les joueurs et les compilent. Ces données compilées fournissent alors à l'entraîneur des indications lui permettant une meilleure gestion de son équipe.

Dans un autre exemple, l'objet portable 1 est équipé d'une fonction ludique du type applaudissement. Pour rappel, cette fonction applaudissement est apte à détecter le mouvement d'un applaudissement pour fournir à l'utilisateur le nombre d'applaudissements effectués et leur intensité. Avec la possibilité d'une communauté 6, il devient possible de réaliser des concours d'applaudissement de sorte que les fans de chaque équipe applaudissent durant un intervalle de temps déterminé, les données du nombre d'applaudissement et de puissance étant alors récupérées et compilées pour fournir une valeur globale d'applaudissement pour chaque équipe et ainsi couronner les meilleurs fans.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Par exemple, il est possible que l'ensemble 6 soit formé de plusieurs regroupements d'objets portables 1 et d'un seul appareil extérieur 3. Les objets portables 1 de chaque regroupement sont alors programmés pour communiquer entre eux et pour communiquer avec l'unique appareil électronique extérieur 3. Cette configuration permet, par exemple, à un entraineur de compartimenter les données entre différents groupes de données. Cette configuration peut également être utilisée pour un arbitre.

De même, il pourra être prévu la possibilité de programmer un objectif en nombre de pas, en nombre de tirs ou en puissance de tir ou en puissance d'applaudissements avec un indicateur permettant d'indiquer le pourcentage de l'objectif réalisé.

## Revendications

1. Objet portable (1) comprenant un boitier (10) dans lequel un module électronique (14) est agencé, ce module électronique étant apte à fournir au moins une information à des moyens d'affichage (18), le module électronique comprenant une unité de calcul (141) lié à un module mémoire (143) et un premier capteur (CPT1), l'unité de calcul étant apte à utiliser un premier algorithme pour coopérer avec le premier capteur pour fournir une information liée à une première fonction, **caractérisé en ce que** le module électronique comprend en outre au moins un second capteur (CPT2), l'unité de calcul étant apte à utiliser un second algorithme pour coopérer avec le second capteur pour fournir une information liée à une seconde fonction.

2. Objet portable selon la revendication 1, **caractérisé en ce que** le premier capteur (CPT1) est doté d'une première sensibilité et le second capteur (CPT2) d'une seconde sensibilité, la seconde sensibilité étant plus grande que la première sensibilité.

3. Objet portable selon les revendications 1 ou 2, **caractérisé en ce que** les premiers et seconds capteurs sont des accéléromètres.

4. Objet portable selon l'une des revendications précédentes, **caractérisé en ce que** l'unité de calcul (141) est apte à gérer plusieurs algorithmes par capteur.

5. Objet portable selon l'une des revendications précédentes, **caractérisé en ce que** le module électronique (14) comprend en outre un module de communication (144) permettant audit objet portable de communiquer avec au moins un autre appareil.

6. Objet portable selon la revendication 5, **caractérisé en ce que** le module de communication (144) permet audit objet portable de communiquer avec un appareil (3) d'un autre type.

7. Objet portable selon la revendication 5, **caractérisé en ce que** le module de communication (144) permet audit objet portable de communiquer avec un appareil (1) d'un même type.

8. Objet portable selon l'une des revendications précédentes, **caractérisé en ce que** le premier algorithme permet de gérer une application podomètre concernant le nombre de pas.

9. Objet portable selon l'une des revendications précédentes, **caractérisé en ce que** le second algorithme permet de gérer une application volley-ball.

10. Objet portable selon l'une des revendications 1 à 8, **caractérisé en ce que** le second algorithme permet de gérer une application applaudissement.

11. Ensemble (6) d'objets portables selon l'une des revendications précédentes, **caractérisé en ce que** lesdits objets portables (1) communiquent entre eux pour s'échanger des informations concernant au moins l'un des premiers et seconds algorithmes.

12. Ensemble (6) d'objets portables selon la revendication 11, **caractérisé en ce que** lesdits objets portables communiquent également avec un appareil (3).

13. Ensemble (6) d'objets portables selon la revendication 12, **caractérisé en ce que** lesdits objets portables sont regroupés en regroupement, chaque objet portable d'un regroupement communiquant avec les différents objets portables du même regroupement et **en ce que** ledit ensemble comprend un unique appareil (3) pour communiquer avec la totalité des objets portables des regroupements.
